# EUROPÄISCHE PATENTSCHRIFT

(11) **EP 1 591 766 B1**
(45) Veröffentlichungstag und Bekanntmachung des Hinweises auf die Patenterteilung: **16.03.2011**
(21) Anmeldenummer: 05103510.3
(22) Anmeldetag: 28.04.2005
(51) Int. Cl.: G01L 5/00, G01L 1/22, G01B 11/30

(54) **Optisches Messgerät und Kraftmesser**
Optical measuring device and force sensor
Dispositif de mesure optique et capteur de force

(30) Priorität: 28.04.2004 DE 202004006799 U
(43) Veröffentlichungstag der Anmeldung: 02.11.2005
(73) Patentinhaber: SENSTRONIC Deutschland GmbH, 67251 Freinsheim (DE)
(72) Erfinder: Kirchdoerffer, Rémy, 67110, Reichshoffen (FR); Ebelt, Gerd, 67251, Freinsheim (DE); Preuss, Wolfgang, 68307, Mannheim (DE)
(74) Vertreter: Sommer, Peter

(56) Entgegenhaltungen:
- EP-A- 0 571 118
- EP-A- 0 682 226
- GB-A- 2 134 267
- GB-A- 2 146 774
- US-A- 4 485 683
- US-A- 4 704 909
- US-A- 5 209 126
- US-A- 6 005 199

## Beschreibung

### Technisches Gebiet

Die Erfindung betrifft ein Messgerät, das ein Gehäuse mit zwei sich gegenüberliegenden Messflächen aufweist, wobei jeder Messfläche ein im Gehäuseinneren angeordneter Lichtsender und Lichtempfänger zugeordnet ist und jede Messfläche eine für Licht zumindest einer Wellenlänge durchlässige Öffnung aufweist.

Ein derartiges Messgerät ist zur Prüfung von industriellen Fertigungswerkzeugen geeignet, bei denen sich der Zustand des Werkzeugs an der Oberflächenbeschaffenheit ablesen lässt, wenn sich während des Gebrauchs Veränderungen an der Werkzeugspitze vollziehen.

Ein Messgerät mit zwei gegenüberliegenden Messflächen eignet sich insbesondere für solche Werkzeuge, die auf ein zwischen zwei gegenüberliegenden Teilen des Werkzeugs angeordneten Werkstück einwirken. Dies kann zum Beispiel ein Präge- oder Stanzwerkzeug sein.

Neben der Oberflächenbeschaffenheit kann bei derartigen Werkzeugen die Kraft, mit der beide Werkzeugteile gegeneinander pressen, eine maßgebliche Größe im Bearbeitungsprozess sein. Diese Presskraft kann sich im Laufe der Zeit verstellen. Daher wird zusätzlich zu dem optischen Meßgerät eine Messung mit einem Kraftmesser durchgeführt.

Dazu sind Kraftmesser bekannt, die das Prinzip der Deformation einer Wheatstone'schen Brücke verwenden und zur Erfassung der Schließkraft von Schweißzangen benutzt werden, (siehe z.B. US-A-6 005 199).

Zur Sicherung der Qualität und für die einwandfreie Funktion ist es daher wichtig, in regelmäßigen Abständen Kontrollen vorzunehmen. Um einen fortlaufenden Betrieb zu wahren ist es von Vorteil, wenn die erforderlichen Messvorgänge mit wenig Aufwand vollzogen werden können.

### Darstellung der Erfindung

Das erfindungsgemäße Messgerät weist ein Gehäuse mit zwei sich gegenüberliegenden Messflächen auf, wobei jeder Messfläche ein im Gehäuseinneren angeordneter Lichtsender und Lichtempfänger zugeordnet ist und jede Messfläche eine für Licht zumindest einer Wellenlänge durchlässige Öffnung aufweist und zumindest eine der beiden Messflächen als Kraftmesser ausgebildet ist. Dies ermöglicht die gleichzeitige optische Prüfung zweier zusammenwirkender Teile eines Werkzeugs als auch die Prüfung der Presskraft des Werkzeugs. Weiterhin kann eine Kalibrierung vorgenommen werden.

Das Messgerät kann vorteilhafterweise derart gestaltet sein, dass die als Kraftmesser ausgebildete Messfläche eine unter Krafteinwirkung verformbare Membran aufweist, da diese einen gut kontrollierbaren Kraft-Dehnungs-Zusammenhang aufweist.

Das Messgeräts kann bevorzugt derart gestaltet werden, dass an der Messfläche mindestens eine Halb- oder Vollbrücke einer elektrischen Anordnung vorgesehen ist, deren Widerstand sich mit der Verformung der Membran unter Krafteinwirkung verändert.

Das Messgerät kann vorteilhafterweise so gestaltet werden, dass die als Kraftmesser ausgebildete Messfläche einen unter Krafteinwirkung sich in seinen elektrischen Eigenschaften verändernden Kraftaufnehmer aufweist, vorzugsweise einen piezoelektrischen Kraftaufnehmer.

Vorteilhafterweise ist das Messgerät so ausgeführt, dass an jeder Messfläche ein Krafteinleitungselement mit einer Anlagefläche vorhanden ist. Dies erlaubt die Verwendung des Messgeräts an zwei Teilen eines Werkzeugs, die an einem Werkzeug befestigt sind.

Es ist von Vorteil, wenn dieses Messgerät mit einer auf einem auswechselbaren Trägerteil angeordneten Anlagefläche ausgestattet ist. Die durch den Verschleiß anfallende Wartung des Messgeräts vereinfacht sich dadurch.

Eine vorteilhafte Weiterbildung des Messgeräts besteht darin, dass die Anlagefläche eine für Licht zumindest einer Wellenlänge durchlässige Öffnung umgibt. Dies ermöglicht eine konzentrische Anordnung der optischen Bauelemente.

Vorteilhafterweise ist das Messgerät so gestaltet, dass das Gehäuse mindestens zweiteilig ist und dass die Messflächen an dem Boden eines einen Innenraum bereit stellenden Gehäuseteil einerseits und auf einem den Innenraum verschließenden Deckel andererseits angeordnet sind und dass eine elektrische Verbindung zu einer im Gehäuseinnern befindlichen elektronischen Schaltung vorgesehen ist. Dies ermöglicht eine Auslesung der gemessenen Daten von außen.

Das Messgerät zeichnet sich vorteilhafterweise dadurch aus, dass die Messfläche am Boden des Gehäuseteils als Kraftmesser ausgebildet ist. Dies hat den Vorteil, dass eine sehr kompakte Anordnung der unterschiedlichen Messverfahren möglich ist.

Vorteilhafterweise wirkt die elektrische Schaltung mit dem Lichtsender und Lichtempfänger im Messgerät zusammen, sodass eine quasi-gleichzeitige Messung ermöglicht wird.

Von besonderem Vorteil ist es, wenn der Lichtsender und der Lichtempfänger für die eine Messfläche mit dem Lichtsender und dem Lichtempfänger für die andere Messfläche in einem gemeinsamen Einsatzteil angeordnet sind. Dies führt zu einer wartungsfreundlichen Ausgestaltung des Messgeräts.

Vorteilhafterweise ist der Lichtsender und der Lichtempfänger für die eine Messfläche im Einsatzteil kreuzweise gegenüberliegend zu dem Lichtsender und dem Lichtempfänger für die andere Messfläche angeordnet, da auf diese Weise beide Werkzeugteile konzentrisch vermessen werden können.

Eine vorteilhafte Ausgestaltung des Messgeräts trägt das Merkmal, dass die optische Achse des Lichtsenders und die optische Achse des Lichtempfängers zueinander schräg stehen und auf die Öffnung ausgerichtet sind. Dieser Aufbau erleichtert die Anordnung der optischen Elemente auf dem beengten Raum.

Vorteilhafterweise ist das Messgerät so ausgebildet, dass das Einsatzteil im Gehäuse bezüglich der als Kraftmesser ausgebildeten Messfläche elastisch gelagert ist. Dieser Aufbau hat den Vorteil, dass die Messeinrichtungen vor den durch die Werkzeugteile einwirkenden Kräften geschützt sind.

Vorteilhafterweise ist das Messgerät so ausgestaltet, dass eine Steuerung mit einem Lernmodus für die optische Messung und einem Lernmodus für die Messung der Kraft vorgesehen ist. So lässt sich das Messgerät auf einfache Weise an die individuellen Anforderungen des Einsatzgebietes anpassen. Es ist möglich, Toleranzwerte einzupflegen, beispielsweise durch Angabe einer Ober- und einer Untergrenze für den Werkzeugdruck. Desweiteren lässt sich so die Kalibrierung der Messeinrichtung auf einfache Weise regelmäßig wiederholen.

Vorteilhafterweise sind Auswahlmittel für den Lernmodus des Messgeräts vorgesehen. Somit kann die Kalibrierung getrennt voneinander vorgenommen werden.

Vorteilhafterweise ist an dem Messgerät eine Signaleinrichtung zum Anzeigen des Betriebszustandes vorgesehen, um eine Auskunft über den Betriebszustand des Messgeräts zu ermöglichen.

Es erweist sich als vorteilhaft, wenn das Messgerät den jeweiligen Betriebszustand signalisiert. Dies erleichtert die Benutzung durch den Bediener.

Vorteilhafterweise sind an dem Messgerät zwei oder drei Vollbrücken an der Membran vorgesehen, so dass eine mehrachsige Auflösung der Richtung der Krafteinleitung möglich ist. Somit können nicht nur axiale Kräfte, sondern auch Querkräfte erfasst werden.

### Kurzbeschreibung der Zeichnung

- Fig. 1: zeigt eine räumliche Aufsicht auf das Messgerät, die
- Fig. 2: zeigt eine räumliche Aufsicht von der anderen Seite, die
- Fig. 3: zeigt einen Schnitt durch das Messgerät entlang einer Achse durch den Mittelpunkt des Geräts, die
- Fig. 4: zeigt eine Draufsicht auf ein geöffnetes Messgerät mit der Anordnung der Lichtempfänger und der Lichtsender.

### Ausführungsbeispiel der Erfindung

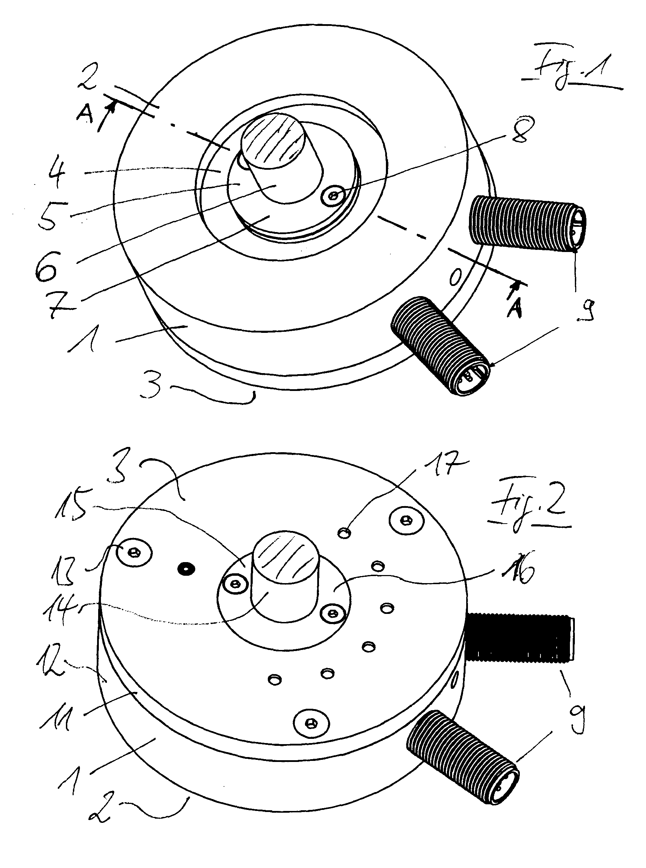

In Fig. 1 ist ein erfindungsgemäßes Messgerät gezeigt. Das Messgerät weist ein Gehäuse 1 mit zwei sich gegenüberliegenden Messflächen 2, 3 auf, die hier als Teil eines Zylinders ausgebildet sind. Es versteht sich von selbst, dass auch andere Gehäuseformen gewählt werden können.

Die Messfläche 2 weist eine unter Krafteinwirkung verformbare Membran 4 auf, so dass sie als Kraftmesser ausgebildet ist. Darüber hinaus ist an der Messfläche 2 ein Krafteinleitungselement 5 vorgesehen, an welchem eine zu messende Werkzeugspitze 6 angreift. Das Krafteinleitungselement 5 ist dazu mit einem auswechselbaren Trägerteil 7 ausgebildet, um im Fall des Verschleißes nicht das komplette Messgerät wechseln zu müssen. Die Befestigung erfolgt über Befestigungsmittel 8, hier in Form von Schrauben. Am Gehäuse 1 sind weiterhin Anschlüsse 9 vorgesehen, um eine im Gehäuseinneren angeordnete elektrische Schaltung zu verbinden.

In Fig. 2 ist das Messgerät aus Fig. 1 in einer Sicht auf die Messfläche 3 dargestellt. Es ist zu erkennen, dass die Messfläche 3 auf einem Deckel 11 angeordnet ist, welcher an einem Gehäuseteil 12 befestigbar ist, beispielsweise mittels Befestigungsmitteln 13, hier Schrauben. Auch an der Messfläche 3 greift eine Werkzeugspitze14 an, wofür ein Krafteinleitungselement 15 ausgebildet ist, das im vorliegenden Fall ein auswechselbares Trägerteil 16 umfasst. Die Werkzeugspitzen 6, 14 wirken beispielsweise so zusammen, dass sie eine Schließkraft auf das Werkstück ausüben.

In dem Deckel 14 sind weiterhin Anzeigemittel 17 vorgesehen, um verschiedene Betriebszustände des Messgeräts anzuzeigen. Die Anzeigemittel 17 sind zum Trägerteil 16 beabstandet. Es ist anzumerken, dass auch die Messfläche 3 mit einer unter Krafteinwirkung verformbaren Membran ausgebildet werden kann, in den meisten Anwendungsfällen ist es jedoch ausreichend, wenn nur eine der beiden Messflächen als Kraftmesser ausgebildet ist. Selbst wenn der die Messfläche 3 tragende Deckel 11 unter Krafteinwirkung der Werkzeugspitze 14 eine gewisse Verformung erfährt, lässt sich allein aufgrund der Verformung der als Kraftmesser ausgebildeten Messfläche 2 ein hinreichend genaues Signal für die Beurteilung der einwirkenden Kraft gewinnen.

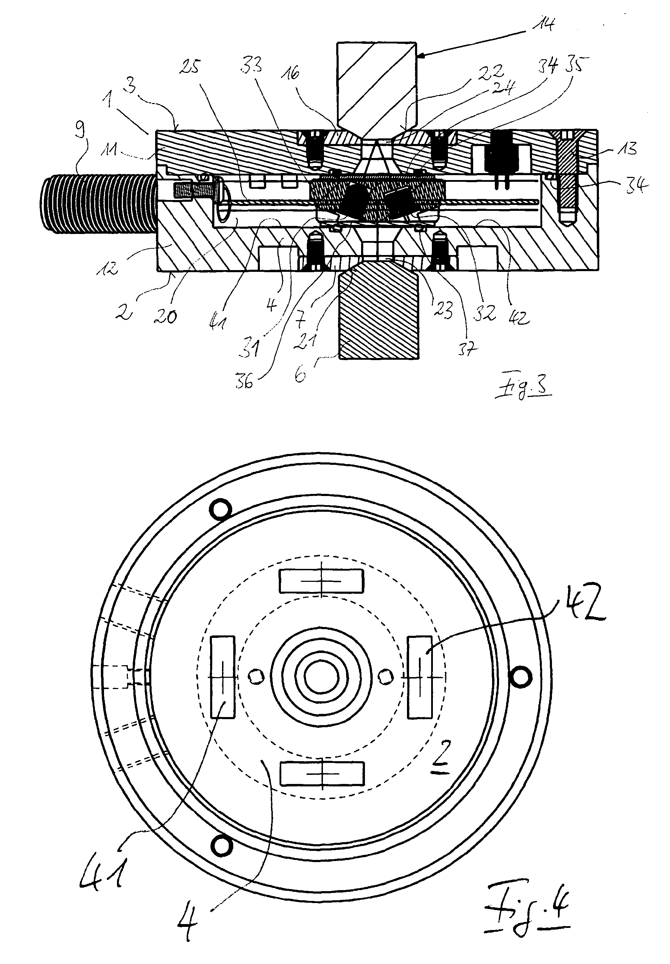

In Fig. 3 ist ein Schnitt durch das Messgerät gemäß der Linie A-A aus Fig. 1 gezeigt. Zu erkennen ist das zweiteilige Gehäuse 1 mit dem Gehäuseteil 12 und dem Deckel 11, welche ein Gehäuseinneres 20 verschließen. An den Messflächen 2, 3 liegen die Werkzeugspitzen 6, 14 an, wozu die Trägerteile 7, 16 mit einer konischen Anlagefläche 21, 22 versehen sind. Die Anlagenflächen 21, 22 entsprechen in Ihrer Geometrie der Spitze der Werkzeugspitzen 6, 14, wobei jedoch die Anlagefläche 21, 22 eine Öffnung 23, 24 aufweist, welche für Licht zumindest einer Wellenlänge durchlässig ist.

Im Gehäuseinnern 20 ist eine elektronische Schaltung 25 angeordnet, welche über den Anschluss 9 von außen zugänglich ist. Weiterhin ist im Gehäuseinnenraum 20 ein Lichtsender 31 und ein Lichtempfänger 32 angeordnet, welche in einem Einsatzteil 33 gehalten und auf die Öffnung 24 ausgerichtet sind. Im Strahlengang des Lichtsenders 31 und Lichtempfängers 32 ist eine Abdeckscheibe 34 vorgesehen, welche gegenüber dem Deckel 11 mit einer Dichtung 35 abgedichtet ist. Die Abdeckscheibe 34 ist für das von dem Lichtempfänger ausgewertete Licht durchlässig.

Im Einsatzteil 33 ist um 90° versetzt zu der in Fig. 3 gezeigten Lage ein weiteres Paar eines Lichtsenders und Lichtempfängers angeordnet, welches auf die Öffnung 23 gerichtet ist. Auch hier ist eine Abdeckscheibe 36 sowie eine Dichtung 37 vorgesehen, um das Gehäuseinnere 20 gegenüber der Öffnung 23 zu verschließen.

Der Lichtsender 31 und Lichtempfänger 32 stehen bezüglich ihrer jeweiligen Mittelachse in einem Winkel zueinander, und sind wie bereits erwähnt wurde, so ausgerichtet, dass eine Endfläche der Werkzeugspitzen 6, 14 beleuchtet wird und die zurückgestrahlte Strahlung im Lichtempfänger 32 erfasst wird.

Selbstverständlich ist es auch möglich, die optische Messung bereits dann durchzuführen, wenn das Prüfobjekt noch nicht zur Anlage gebracht wurde. In diesem Fall ist es möglich, größere Flächen als die durch die Öffnung 24 begrenzte Fläche zu vermessen.

An der Membran 4 der Messfläche 2 sind im Gehäuseinneren Teile 41, 42 einer Vollbrücke einer elektrischen Anordnung vorgesehen, deren Widerstand sich mit der Verformung der Membran 4 unter Krafteinwirkung verändert. Derartige Vollbrücken sind für die Kraftmessung Stand der Technik. Diese Vollbrücke ist mit der elektrischen Schaltung 25 elektrisch verbunden.

Selbstverständlich ist auch vorstellbar, einen unter Krafteinwirkung sich in seinen elektrischen Eigenschaften verändernden Kraftaufnehmer vorzusehen, beispielsweise eine piezoelektrischen Kraftaufnehmer.

Der Deckel 11 ist mit dem Gehäuseteil 12 über die Schraube 13 verbunden und mit einem Dichtungselement 34 abgedichtet.

In Fig. 4 ist ein Blick auf die als Kraftmesser ausgebildete Messfläche 2 von der Innenseite her gezeigt. Zu erkennen ist die elektrische Anordnung 41, 42 einer Vollbrücke, im Bereich der Membran 4. Die elektrische Anordnung 41, 42, besteht aus Dehnungsmessstreifen, die ihren Widerstand mit der Verformung unter Krafteinwirkung ändern. Derartige Messbrücken sind Stand der Technik.

### Bezugszeichenliste

- 1: Gehäuse
- 2: Messfläche
- 3: Messfläche
- 4: Membran
- 5: Krafteinleitungselement
- 6: Werkzeugspitze
- 7: Trägerteil
- 8: Befestigungsmittel
- 9: Anschlüsse
- 11: Deckel
- 12: Gehäuseteil
- 13: Befestigungsmittel
- 14: Werkzeugspitze
- 15: Krafteinleitungselement
- 16: Trägerteil
- 17: Anzeigemittel
- 20: Gehäuseinneres
- 21: Anlagefläche
- 23: Öffnung
- 24: Öffnung
- 31: Lichtsender
- 32: Lichtempfänger
- 33: Einsatzteil
- 34: Abdeckscheibe
- 35: Dichtung
- 36: Abdeckscheibe

## Patentansprüche

1. Messgerät, aufweisend ein Gehäuse (1) mit zwei sich gegenüberliegenden Messflächen (2, 3), wobei jeder Messfläche ein im Gehäuseinneren angeordneter Lichtsender (31) und Lichtempfänger (32) zugeordnet ist, wobei jede Messfläche (2, 3) eine für Licht zumindest einer Wellenlänge durchlässige Öffnung (23, 24) aufweist, wobei zumindest eine der beiden Messflächen (2) als Kraftmesser ausgebildet ist.

2. Messgerät nach Anspruch 1, **dadurch gekennzeichnet, dass** die als Kraftmesser ausgebildete Messfläche (2) eine unter Krafteinwirkung verformbare Membran (4) aufweist.

3. Messgerät nach Anspruch 2, **dadurch gekennzeichnet, dass** an der Messfläche (2) mindestens eine Halb- oder Vollbrücke einer elektrischen Anordnung (41, 42) vorgesehen ist, deren Widerstand sich mit der Verformung der Membran (4) unter Krafteinwirkung verändert.

4. Messgerät nach Anspruch 1, **dadurch gekennzeichnet, dass** die als Kraftmesser ausgebildete Messfläche (2) einen unter Krafteinwirkung sich in seinen elektrischen Eigenschaften verändernden Kraftaufnehmer aufweist, vorzugsweise einen piezoelektrischen Kraftaufnehmer.

5. Messgerät nach einem der Ansprüche 1 bis 4, **dadurch gekennzeichnet, dass** an jeder Messfläche ein Krafteinleitungselement (5, 15) mit einer Anlagefläche (21, 22) vorhanden ist.

6. Messgerät nach Anspruch 5, **dadurch gekennzeichnet, dass** die Anlagefläche (21, 22) auf einem auswechselbaren Trägerteil (7) angeordnet ist.

7. Messgerät nach Anspruch 5 oder 6, **dadurch gekennzeichnet, dass** die Anlagefläche (21, 22) die für Licht zumindest einer Wellenlänge durchlässige Öffnung (23, 24) umgibt.

8. Messgerät nach einem der Ansprüche 1 bis 7, **dadurch gekennzeichnet, dass** das Gehäuse (1) mindestens zweiteilig ist und dass die Messflächen (2, 3) an dem Boden eines einen Innenraum bereit stellenden Gehäuseteil (12) einerseits und auf einem den Innenraum verschlieβenden Deckel (11) andererseits angeordnet sind und dass eine elektrische Verbindung zu einer im Gehäuseinnern (20) befindlichen elektrischen Schaltung (25) vorgesehen ist.

9. Messgerät nach Anspruch 8, **dadurch gekennzeichnet, dass** die Messfläche (2) am Boden des Gehäuseteils (12) als Kraftmesser ausgebildet ist.

10. Messgerät nach einem der Ansprüche 8 oder 9, **dadurch gekennzeichnet, dass** die elektrischen Schaltung (25) mit dem Lichtsender (31) und Lichtempfänger (32) zusammenwirkt.

11. Messgerät nach einem der Ansprüche 1 bis 10, **dadurch gekennzeichnet, dass** der Lichtsender (31) und der Lichtempfänger (32) für die eine Messfläche (3) mit dem Lichtsender und dem Lichtempfänger für die andere Messfläche (2) in einem gemeinsamen Einsatzteil (33) angeordnet sind.

12. Messgerät nach Anspruch 11, **dadurch gekennzeichnet, dass** der Lichtsender (31) und der Lichtempfänger (32) für die eine Messfläche (3) im Einsatzteil (33) kreuzweise gegenüberliegend zu dem Lichtsender und dem Lichtempfänger für die andere Messfläche (2) angeordnet sind.

13. Messgerät nach einem der Ansprüche 11 oder 12, **dadurch gekennzeichnet, dass** die optische Achse des Lichtsenders (31) und die optische Achse des Lichtempfängers (32) zueinander schräg stehen und auf die Öffnung (23, 24) ausgerichtet sind.

14. Messgerät nach einem der Ansprüche 11 bis 13, **dadurch gekennzeichnet, dass** das Einsatzteil (33) im Gehäuse (1) bezüglich der als Kraftmesser ausgebildeten Messfläche (2) elastisch gelagert ist.

15. Messgerät nach einem der Ansprüche 1 bis 14, **dadurch gekennzeichnet, dass** eine Steuerung (15) mit einem Lernmodus für die optische Messung und einem Lernmodus für die Messung der Kraft vorgesehen ist.

16. Messgerät nach Anspruch 15, **dadurch gekennzeichnet, dass** Auswahlmittel für den Lernmodus vorgesehen sind.

17. Messgerät nach einem der Ansprüche 15 oder 16, **dadurch gekennzeichnet, dass** eine Signaleinrichtung (17) vorgesehen ist zum Anzeigen des Betriebszustandes.

18. Messgerät nach einem der Ansprüche 15 bis 17, **dadurch gekennzeichnet, dass** der jeweilige Betriebszustand signalisiert wird.

19. Messgerät nach Anspruch 2 oder 3 sowie nach einem der Ansprüche 4 bis 18, **dadurch gekennzeichnet, dass** zwei oder drei Vollbrücken an der Membran (4) vorgesehen sind, so dass eine mehrachsige Auflösung der Richtung der Krafteinleitung möglich ist.

## Claims

1. A measuring device, comprising a housing (1) having two opposing measuring surfaces (2, 3), to each of which measuring surfaces there are assigned a phototransmitter (31) and a photoreceiver (32) disposed in the interior of said housing, each measuring surface (2, 3) having an opening (23, 24) which is transparent to light of at least one wavelength, at least one of the two measuring surfaces (2) being in the form of a dynamometer.

2. A measuring device as defined in claim 1, **characterized in that** said measuring surface (2) designed as a dynamometer exhibits a diaphragm (4) capable of being deformed under the action of force.

3. A measuring device as defined in claim 2, **characterized in that** said measuring surface (2) is provided with at least one half bridge or full bridge forming part of an electrical system (41, 42) and adapted to change its resistance when said diaphragm (4) is deformed under the action of force.

4. A measuring device as defined in claim 1, **characterized in that** said measuring surface (2) designed as a dynamometer exhibits a force transducer capable of changing its electrical characteristics when force is exerted thereon, preferably a piezoelectric force transducer.

5. A measuring device as defined in any one of claims 1 to 4, **characterized in that** on each measuring surface there is present a force conductor (5, 15) having a bearing surface (21, 22).

6. A measuring device as defined in claim 5, **characterized in that** said bearing surface (21, 22) is located on an exchangeable mount (7).

7. A measuring device as defined in claim 5 or claim 6, **characterized in that** said bearing surface (21, 22) surrounds said opening (23, 24) that is transparent to light of at least one wavelength.

8. A measuring device as defined in any one of claims 1 to 7, **characterized in that** housing (1) is at least two-membered and that one of the measuring surfaces (2, 3) is disposed at the bottom of a housing part (12) forming an interior space and the other measuring surface is disposed on a cover (11) adapted to close said interior space and that an electrical connection to an electrical circuit (25) located in the interior (20) of the housing is provided.

9. A measuring device as defined in claim 8, **characterized in that** said measuring surface (2) disposed at the bottom of said housing part (12) is in the form of a dynamometer.

10. A measuring device as defined in claim 8 or claim 9, **characterized in that** said electrical circuit (25) cooperates with said phototransmitter (31) and said photoreceiver (32).

11. A measuring device as defined in any one of claims 1 to 10, **characterized in that** said phototransmitter (31) and said photoreceiver (32) associated with one measuring surface (3) are disposed, together with said phototransmitter and said photoreceiver associated with the other measuring surface (2), in a common insert (33).

12. A measuring device as defined in claim 11, **characterized in that** said phototransmitter (31) and said photoreceiver (32) associated with one measuring surface (3) are disposed in insert (33) one opposite the other in a crisscross arrangement relative to said phototransmitter and said photoreceiver associated with the other measuring surface (2).

13. A measuring device as defined in claim 11 or claim 12, **characterized in that** the optical axis of said phototransmitter (31) and the optical axis of said photoreceiver (32) are at an angle to each other and are oriented toward said opening (23, 24).

14. A measuring device as defined in any one of claims 11 to 13, **characterized in that** said insert (33) is resiliently mounted in said housing (1) with reference to the measuring surface (2) designed as a dynamometer.

15. A measuring device as defined in any one of claims 1 to 14, **characterized in that** control means (15) exhibiting a learning mode for optical measurement and a learning mode for force measurement are provided.

16. A measuring device as defined in claim 15, **characterized in that** means of selection are provided for the learning mode.

17. A measuring device as defined in claim 15 or claim 16, **characterized in that** a signal device (17) is provided to indicate the operating status.

18. A measuring device as defined in any one of claims 15 to 17, **characterized in that** the current operating status is signaled.

19. A measuring device as defined in claim 2 or claim 3 and also as defined in any one of claims 4 to 18, **characterized in that** two or three full bridges are provided on said diaphragm (4) so that a multi-axially resolution of the direction of the force flow is possible.

## Revendications

1. Appareil de mesure, présentant un logement (1) avec deux surfaces de mesure (2, 3) situées en vis-à-vis, où à chaque surface de mesure est associée un émetteur de lumière (31) et un récepteur de lumière (32) disposés à l'intérieur du logement, chaque surface de mesure (2, 3) présentant une ouverture transparente (23, 24) pour de la lumière d'au moins une longueur d'onde, au moins l'une des deux surfaces de mesure (2) étant réalisée en tant que dynamomètre.

2. Appareil de mesure selon la revendication 1, **caractérisé en ce que** la surface de mesure (2) réalisée en tant que dynamomètre présente une membrane (4) pouvant se déformer sous l'effet d'une force.

3. Appareil de mesure selon la revendication 2, **caractérisé en ce que** l'on prévoit sur la surface de mesure (2) au moins un demi-pont ou pont complet d'un dispositif électrique (41, 42) dont la résistance varie en fonction de la déformation de la membrane (4) sous l'effet d'une force.

4. Appareil de mesure selon la revendication 1, **caractérisé en ce que** la surface de mesure (2) réalisée en tant que dynamomètre présente un capteur de force dont les propriétés électriques varient sous l'effet d'une force, de préférence un capteur de force piézoélectrique.

5. Appareil de mesure selon l'une des revendications 1 à 4, **caractérisé en ce qu'**à chaque surface de mesure, il y a un élément d'introduction d'une force (5, 15) avec une surface de butée (21, 22).

6. Appareil de mesure selon la revendication 5, **caractérisé en ce que** la surface de butée (21, 22) est disposée sur un élément de support (7) interchangeable.

7. Appareil de mesure selon la revendication 5 ou 6, **caractérisé en ce que** la surface de butée (21, 22) entoure l'ouverture transparente pour de la lumière d'au moins une longueur d'onde (23, 24).

8. Appareil de mesure selon l'une des revendications 1 à 7, **caractérisé en ce que** le logement (1) est au moins en deux pièces et **en ce que** les surfaces de mesure (2, 3) sont disposées d'une part sur le fond d'un élément de logement (12) mettant à disposition un espace intérieur et d'autre part sur un couvercle (11) fermant l'espace intérieur, et **en ce qu'**une liaison électrique avec une commutation électrique (25) qui se trouve à l'intérieur du logement (20) est prévue.

9. Appareil de mesure selon la revendication 8, **caractérisé en ce que** la surface de mesure (2) sur le fond de l'élément de logement (12) est réalisée en tant que dynamomètre.

10. Appareil de mesure selon l'une des revendications 8 ou 9, **caractérisé en ce que** la commutation électrique (25) coopère avec l'émetteur de lumière (31) et le récepteur de lumière (32).

11. Appareil de mesure selon l'une des revendications 1 à 10, **caractérisé en ce que** l'émetteur de lumière (31) et le récepteur de lumière (32) pour l'une des surfaces de mesure (3) sont disposés avec l'émetteur de lumière et le récepteur de lumière pour l'autre des surfaces de mesure (2) dans une pièce d'utilisation (33) commune.

12. Appareil de mesure 11, **caractérisé en ce que** l'émetteur de lumière (31) et le récepteur de lumière (32) pour l'une de ces surfaces de mesure (3) sont disposés dans la pièce d'utilisation (33) en vis-à-vis de manière croisée par rapport à l'émetteur de lumière et au récepteur de lumière pour l'autre des surfaces de mesure (2).

13. Appareil de mesure selon l'une des revendications 11 ou 12, **caractérisé en ce que** l'axe optique de l'émetteur de lumière (31) et l'axe optique du récepteur de lumière (32) sont en biais l'un par rapport à l'autre et sont orientés vers l'ouverture (23, 24).

14. Appareil de mesure selon l'une des revendications 11 à 13, **caractérisé en ce que** la pièce d'utilisation (33) est montée de manière élastique dans le logement (1) par rapport à la surface de mesure (2) réalisée en tant que dynamomètre.

15. Appareil de mesure selon l'une des revendications 1 à 14, **caractérisé en ce qu'**une commande (15) avec un mode d'apprentissage pour la mesure optique et un mode d'apprentissage pour la mesure de la force est prévue.

16. Appareil de mesure selon la revendication 15, **caractérisé en ce que** l'on prévoit des moyens de sélection pour le mode d'apprentissage.

17. Appareil de mesure selon l'une des revendications 15 ou 16, **caractérisé en ce qu'**un dispositif de signalisation (17) est prévu pour indiquer l'état de fonctionnement.

18. Appareil de mesure selon l'une des revendications 15 à 17, **caractérisé en ce que** l'état de fonctionnement respectif est signalé.

19. Appareil de mesure selon la revendication 2 ou 3 ainsi que selon l'une des revendications 4 à 18, **caractérisé en ce que** deux ou trois ponts complets sont prévus sur la membrane (4), de sorte qu'une décomposition en plusieurs axes de la direction d'introduction d'une force est possible.
